# EUROPEAN PATENT SPECIFICATION

(11) **EP 1 247 413 B1**
(45) Date of publication and mention of the grant of the patent: **07.04.2004**
(21) Application number: 01942500.8
(22) Date of filing: 12.01.2001
(51) Int. Cl.: H04Q 7/32

(54) **REPRESENTATION OF APPLICATIONS IN A TELECOMMUNICATION SYSTEM**
DARSTELLUNG VON ANWENDUNGEN IN EINEM TELEKOMMUNIKATIONSSYSTEM
REPRESENTATIONS D'APPLICATIONS DANS UN SYSTEME DE TELECOMMUNICATIONS

(30) Priority: 12.01.2000 FI 20000062
(43) Date of publication of application: 09.10.2002
(73) Proprietor: TeliaSonera Finland Oyj, 00510 Helsinki (FI)
(72) Inventor: HEINONEN, Petteri, FIN-02600 Espoo (FI); VIRKKULA, Petri, FIN-02150 Espoo (FI)
(74) Representative: Simmelvuo, Markku
(86) International application number: PCT/FI2001/000028
(87) International publication number: WO 2001/052575

(56) References cited:
- EP-A2- 0 869 691
- WO-A1-00/72545
- WO-A2-99/63767

## Description

### FIELD OF THE INVENTION

The present invention relates to telecommunication systems. In particular, the invention relates to a method and a system for the using and representation of applications stored on a smart card in a telecommunication system comprising a telecommunication network; a terminal device which is connected to the telecommunication network; a server which is connected to the telecommunication network; a smart card which has been inserted into the terminal device; a SIM Application Toolkit which has been arranged in the terminal device and/or the smart card. In the telecommunication system, the terminal device comprises the necessary features for using the WAP (WAP, Wireless application Protocol).

### BACKGROUND OF THE INVENTION

The use of the wireless application protocol is becoming common in solutions in which a connection is needed between portable terminal devices, such as mobile stations and the Internet applications, e.g. electronic mail, WWW (World Wide Web), news groups. The wireless application protocol provides an architecture which adapts mobile phones, browser programs of mobile phones, and the WWW to work as a functional entity. The HTML language (Hyper Text Mark-up Language) used in the WWW is translated into a WML (Wireless Mark-up Language) designed for the wireless environment, when information is being transmitted to mobile stations. At present, as the description language of the WAP standard, the WML language is used, but the language may be understood to mean also any other description language consistent with the future WAP standard. The wireless application protocol comprises of the following five layers: wireless application environment (WAE, Wireless Application Environment), wireless session layer (WSL, Wireless Session Layer), wireless transaction layer (WTP, Wireless Transaction Layer), wireless transport layer security (WTLS, Wireless Transport Layer Security), and wireless datagram layer (WDP, Wireless Datagram Layer). The wireless application environment is used to mean, e.g. a WTA (WTA, Wireless Telephone Application), or some other suitable environment. Lowermost is yet a system dependant layer which defines the transfer mode of the information inside the system in question. The specification accepted at the moment is the WAP specification 1.1. The aforementioned specification and other WAP related specifications are available at the Internet address www.wapforum.com.

Ericsson, Motorola, Nokia and Phone.com founded in 1997 the WAP Forum. The WAP Forum is among other things an open association of terminal manufactures, operators and different service providers, which anyone can join. One specific objective of the WAP architecture is to enable the use of services provided by the Internet on terminals whose data processing capacity, size of display or storage capacity is small or restricted. Terminals as described above are, e.g. mobile stations and PDAs (PDA, Personal Digital Assistant).

The undeniable advantage of a mobile communication network, e.g. a GSM system (GSM, Global System for Mobile communications) as compared with a public switched telephone network (PSTN, Public Switched Telephone Network) is the mobility management. The mobile communication network enables one to make and receive phone calls anywhere in the coverage area of the network. In this application, a mobile communication network is advantageously used to mean a digital mobile network.

The substantial part of the function of the terminal devices of mobile communication networks, the mobile stations, is the subscribe identity module (SIM, Subscriber Identity Module). When you separate the actual terminal device and the subscriber identity module individualizing the subscriber from one another, a system is established in which specific operators may offer different services to the users of the mobile stations. The operator is herein used to mean an entity which has got the infrastructure of the mobile communication network at his or her disposal in order to provide mobile communication services. The separating of the mobile station and the subscriber identity module from one another enables a constant development of services connected with the mobile stations and the introduction of new, operator-specific services. The functional interface between the mobile station and the subscriber identity module has been described in the specification TS 100 977 V7.3.0 (1999-07) of ETSI. (ETSI, European Telecommunications and Standard Institute).

The step of development connected with the function of the subscriber identity module is the definition of the SIM Application Toolkit which defines specifications to the interface between the mobile station and the subscriber identity module. The SIM Application Toolkit is used to mean all those functions and mechanisms that enable the interaction of the applications on the subscriber identity module with the mobile station. This requires that the mobile station supports the functions and mechanisms needed in the interaction. The SIM application Toolkit has been defined in the specification TS 101 267 V7.3.1 (1999-07) of ETSI.

The problem is the combining of the SIM Application Tolkit and the wireless application protocol in such a way that the WAP application need not know beforehand what kind of SIM Application Toolkit applications there are on the subscriber identity module. Furthermore, the problem is the fact of how the user interface of the SIM Application Toolkit is manifested in the WAP.

### OBJECTIVE OF THE INVENTION

The objective of the invention is to eliminate the drawbacks referred to above, or at least significantly to alleviate them. One specific objective of the invention is to disclose a method and a system which enables one to easily change the representation mode of the user interface or the structure of the applications, when SIM Application Toolkit is being used in the WAP. Moreover, thanks to the invention, the co-operation of the SIM Application Toolkit and the WAP may be easily implemented.

As for the features characteristic of the invention, reference is made to them in the claims.

### BRIEF DESCRIPTION OF THE INVENTION

The invention relates to the using and representation of applications stored on a smart card in a telecommunication system. One specific objective of the invention is to enable the co-operation of the SIM Application Toolkit applications and the WAP in such a way that the SIM Application Toolkit and its services may be used and displayed in the WAP without the WAP application having to know beforehand what kind of SIM Application Toolkit applications there are on the smart card.

The telecommunication system of the invention comprises a telecommunication network, a terminal device which is connected to the telecommunication network, a server which is connected to the telecommunication network, a smart card which has been inserted into the terminal device, a SIM Application Toolkit which has been arranged in the terminal device and/or the smart card. In the method, the terminal device comprises the necessary features for using the WAP. This means, e.g. that the terminal device comprises a WAP client program and that the terminal device is capable of displaying functions connected with the WAP client program.

According to the invention, a piece of definition information is created that contains information about the SIM Application Toolkit applications and about their use in a WAP environment. Definition information is read, when one wishes to use SIM Application Toolkit applications in a WAP environment. SIM Application Toolkit applications are being displayed on the terminal device in a WAP environment in a way as defined by the piece of definition information. The piece of definition information may be created, e.g. on the terminal device and/or the smart card. The piece of definition information may be used to define, e.g. the fact of how SIM Application Toolkit applications are being displayed on the terminal device. The exterior features of the user interface may depend, e.g. on the size of the display of the terminal device.

In one embodiment of the invention, the piece of definition information is created on a server which is connected to the telecommunication network. On the terminal device and/or smart card there is, e.g. a pointer stored that refers to the piece of definition information located on the server. The pointer is, e.g. a URL address (URL, Universal Resource Locator). Based on the pointer, the piece of definition information may be retrieved from the server by way of the telecommunication network. In addition, the piece of definition information may be authenticated by means of the digital signature. Because of this, one can be sure of the fact that the content of the piece of definition information has not been changed.

In another embodiment of the invention, it is possible to edit the piece of definition information by means of the terminal device. Because of the possibility of editing, the representation mode of the user interface and/or the structure of the applications can be changed in real-time.

The system of the invention comprises a piece of definition information which comprises information about the SIM Application Toolkit applications at the disposal of the terminal device and about their use in a WAP environment, an information reader which is used to read definition information, when one wishes to use SIM Application Toolkit applications in a WAP environment, and a generator which is used to display SIM Application Toolkit applications on the terminal device in a WAP environment in a way as defined by the piece of definition information.

In one embodiment, the piece of definition information has been arranged in the terminal device and/or smart card. In another embodiment, the piece of definition information has been arranged in the server, and in addition, the terminal device and/or smart card may comprise a pointer which refers to the piece of definition information located on the server. Further, the terminal device and/or smart card may comprise an information retrieval entity for retrieving the piece of definition information

In an embodiment of the invention, the terminal device and/or smart card comprises a modifier for modifying the piece of definition information.

In an embodiment of the invention, the terminal device/and or smart card comprises a certification entity which is used to make sure of the reliability and origin of the piece of definition information. The certification entity enables one to find out, e.g. whether the possible digital signature connected with the piece of definition information is authentic.

In an embodiment of the invention, the smart card is a subscriber identity module. The subscriber identity module may comprise a WIM (WIM, WAP Identity Module) by means of which it is possible to implement measures required by the WAP protocol.

In an embodiment of the invention, the smart card comprises a WIM. In an embodiment, the piece of definition information is part of WIM.

In an embodiment of the invention, the terminal device is a mobile station. In an embodiment of the invention, the telecommunication network is a mobile communication network.

Thanks to the present invention, it is possible to use in WAP the SIM Application Toolkit and the services provided by it without the WAP application having to know beforehand what kind of applications there are on the smart card, which is preferably a subscriber identity module. Thanks to the invention, the user interface connected with the SIM Application Toolkit applications looks like a normal WML site.

### BRIEF DESCRIPTION OF THE DRAWINGS

In the following section, the invention will be described in detail by the aid of a few examples of its embodiments with reference to the accompanying drawing, in which
Fig. 1 represents one advantageous embodiment in accordance with the invention
Fig. 2 is a flow chart illustrating the function of the present invention; and
Fig. 3 is a signaling diagram illustrating the function of the present invention.

### DETAILED DESCRIPTION OF THE INVENTION

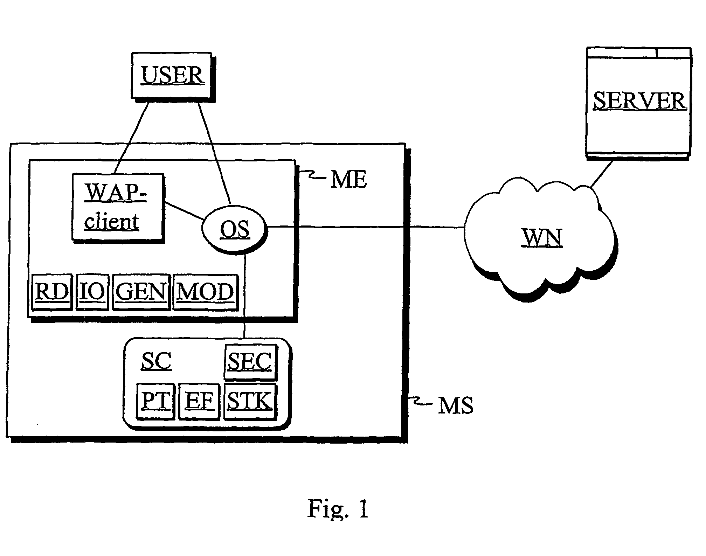

The system as described in Fig. 1 comprises a terminal device MS, a telecommunication network WN and a server SERVER. The terminal device MS and the server SERVER communicate with the telecommunication network WN. The terminal device MS is preferably a mobile station and the telecommunication network a mobile communication network. The system as shown in Fig. 1 comprises, in addition, a user USER, under whose control and at whose disposal the mobile station MS is. In this example, the mobile station MS consists of the mobile station equipment itself and a smart card SC. The mobile station MS may, in addition, comprise many other parts, components or features which are not necessary to present in this connection and which are obvious to a man skilled in the art.

The smart card is preferably a subscriber identity module SIM. If the smart card SC is a subscriber identity module, it may also comprise a WIM. In such a situation, the SIM functionality connected with the mobile communication network WN and the WIM functionality may use different logical channels. WIM is used to mean a protected device or instrument which is used to perform different measures and saves of WAP connected with the security. WIM may be used to perform, e.g. security measures connected with the WTLS and application level. In particular, WIM may be used to save and process information that is needed in identification and authentication. The smart card SC may also be merely a WIM card.

In the example as shown in Fig 1, the smart card SC comprises a SIM Application Toolkit STK. The SIM Application Toolkit STK is used to mean all those functions and mechanisms that enable the interaction of the applications on the subscriber identity module with the mobile station. On the smart card SC there is also a piece of definition information EF arranged that comprises information about the SIM Application Toolkit applications at the disposal of the mobile station MS and about their use in a WAP environment. The piece of definition information EF may also be generated on the server SERVER. This implementation mode requires, however, that the security factors are carefully considered. In this situation, the data transfer may have to be encrypted and one has to take care of the identification of parties. The smart card SC comprises a pointer PT which refers to the piece of definition information located in the server SERVER. Thanks to the pointer PT, the piece of definition information EF included in the server SERVER may be retrieved by way of the telecommunication network WN. The smart card SC may, in addition, comprise a certification entity which enables one to make sure of the reliability and origin of the piece of definition information.

The mobile station equipment as shown by Fig. 1 comprises an operating system OS, a WAP client program WAP client, an information reader RD, an information retrieval entity IO, a generator GEN and a modifier MOD. The operating system OS communicates with the user USER, WAP client program WAPclient and smart card SC. The information reader is used to read the definition information EF in a situation where one wishes to use SIM Application Toolkit applications in a WAP environment. The information retrieval entity IO may be used to retrieve the piece of definition information on the server SERVER in a situation where the piece of definition information EF has not been saved to the mobile station MS. The generator GEN is used to display SIM Application Toolkit applications on the terminal device MS in a WAP environment in a way as defined by the piece of definition information EF.

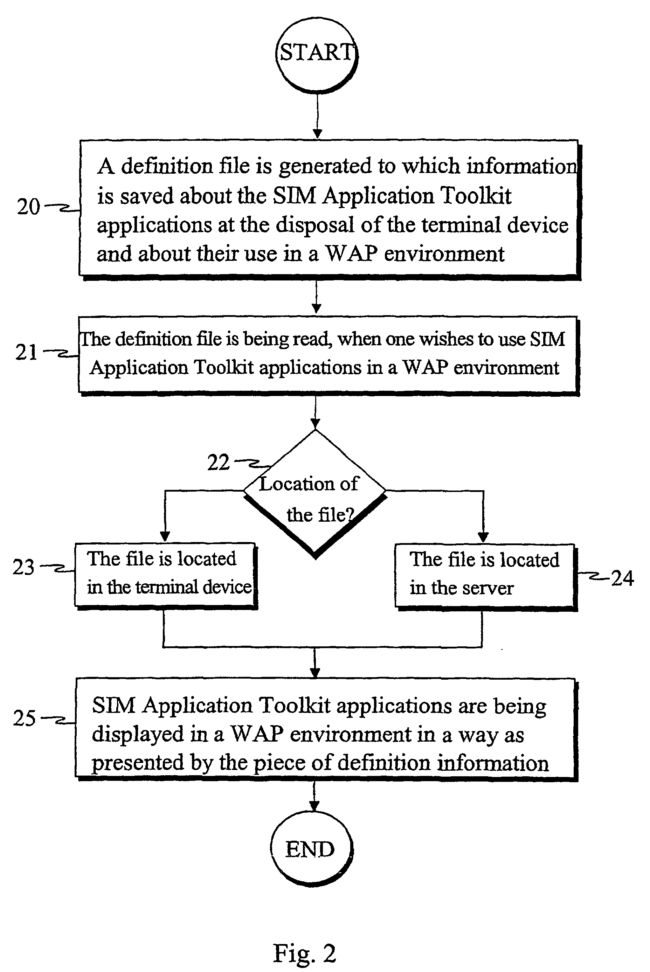

Fig. 2 represents a flow chart illustrating the function of the present invention. As shown in block 20, a piece of definition information is generated that comprises information about the SIM Application Toolkit applications at the disposal of the mobile station and about their use in a WAP environment. The terminal device comprises the necessary means and equipment for reading the piece of definition information. As shown in block 21, the piece of definition information is read, when one wishes to use SIM Application Toolkit applications in a WAP environment. As shown in the present invention, the piece of definition information may be located either in the terminal device or in a server connected to the telecommunication network, blocks 23 and 24.

When the piece of definition information has been retrieved from an appropriate place, SIM Application Toolkit applications are being displayed in a WAP environment on the terminal device as shown by the piece of definition information, block 25.

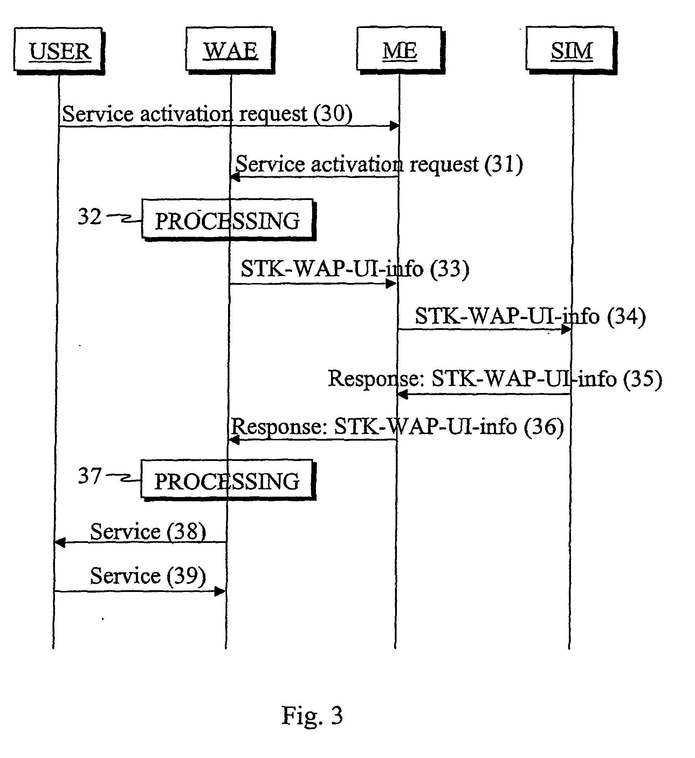

Fig. 3 represents one example of a signaling diagram illustrating the function of the present invention. The example as shown in Fig 3 comprises a user USER, a wireless environment WAE, a mobile station ME and a subscriber identity module SIM inserted into the mobile station.

The user USER shows his or her wish to utilize some SIM Application Toolkit applications in a WAP environment by a certain key command, arrow 30. The command given by the user USER is transmitted to the WAE environment WAE, arrow 31. The PROCESSING box 32 means that at this point in the WAE environment WAE, it is found out what the received service request means and how one has to react to it. The WAE environment WAE sends a service request via the mobile station ME to the subscriber identity module SIM, arrows 33 and 34. By means of the service request one tries to find out how the SIM Application Toolkit applications are being presented in a WAE environment WAE, e.g. in a WML language. To the subscriber identity module, it is possible to save a specific piece of definition information which comprises information about the SIM Application Toolkit applications at the disposal of the terminal device ME and about their use in a WAE environment WAE.

The subscriber identity module returns a response to the presented service request, arrows 35 and 36. The PROCESSING box 37 describes the fact that the form and meaning of the response returned by the subscriber identity module SIM is being interpreted. As shown by arrows 38 and 39, the SIM Application Toolkit application is presented to the user USER by a description language suitable for the purpose, e.g. a WML language.

In an embodiment of the invention, the piece of definition information may comprise following descriptions:

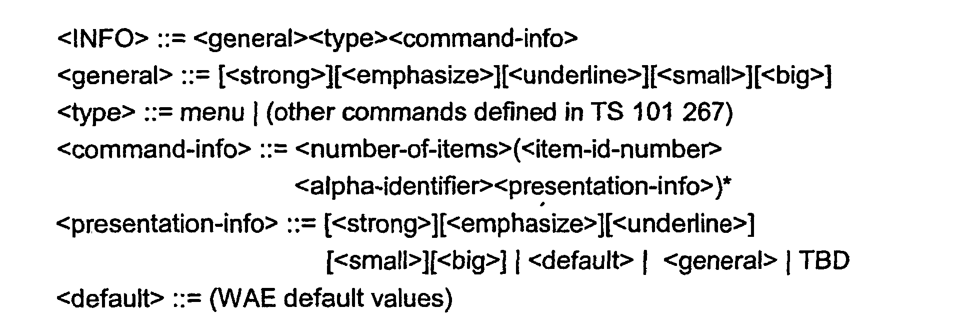

The first line describes the fact of what elements the <INFO> field consists of. It consists of the field <general>, <type> and <command-info>. The <INFO>-field always comprises the three aforementioned fields. The <General>-field may comprise following definitions: <strong>, <emphasize>, <underline>, <small> and <big>. The brackets on the line mean that any combinations of the aforementioned fields are possible. In other words, each field may appear alone or as a combination with others. The Type> -field comprises the message to be transmitted or the type of the command. One example of this is the <menu>-type. Other possible types are defined in the specification TS 101 267 of ETSI.

The <Command-info> field consists of the field <number-of-items>. At the end of it may be an undetermined number of field combination <item-id-number><alpha-identifier><presentation-info>. The <Presentation-info> field may comprise the same information as the <general> field. Alternatively, it may comprise the <default>-field or tai TBD. The value of the <Default>-field may be one of the initial values of WAE.

The invention is not restricted merely to the examples of its embodiments referred to above, instead many variations are possible within the scope of the inventive idea defined by the claims.

## Claims

1. A method for using applications stored on a terminal device and/or smart card in a telecommunication system comprising a telecommunication network (WN), the method comprising the steps of:
connecting a terminal device (MS) to the telecommunication network, said terminal device (MS) comprising the necessary features for using the WAP;
connecting a server (SERVER) to the telecommunication network (WN);
inserting a smart card (SC) into the terminal device (MS); and
providing a SIM Application Toolkit (STK) in the terminal device (MS) and/or smart card (SC);
**characterised in that** the method further comprises the steps of:
generating a piece of definition information (EF) which comprises information about the SIM Application Toolkit applications at the disposal of the terminal device (MS) and about the use of said applications in a WAP environment;
reading definition information (EF) to use SIM Application Toolkit applications in a WAP environment;
displaying SIM Application Toolkit applications on a terminal device (MS) in a WAP environment in the way as defined by the piece of definition information (EF).

2. A method as defined in claim 1, **characterised in that** a piece of definition information (EF) is generated on the terminal device (MS) and/or smart card (SC).

3. A method as defined in claim 1, **characterised in that** the method comprises the steps of:
generating a piece of definition information (EF) on the server (SERVER);
storing on the terminal device (MS) and/or smart card (SC) a pointer which refers to the piece of definition information (EF) located on the server (SERVER); and
retrieving the piece of definition information (EF) by way of the telecommunication network (WN).

4. A method as defined in any one of the preceding claims 1, 2 or 3, **characterised in that** the piece of definition information (EF) is being edited on the terminal device (MS).

5. A method as defined in any one of the preceding claims 1, 2, 3 or 4, **characterised in that** the reliability and origin of the piece of definition information (EF) is ascertained by utilizing a certification entity (SEC) provided in the terminal device (MS) and/or smart card (SC).

6. A method as defined in any one of the preceding claims 1, 2, 3, 4 or 5, **characterised in that** the smart card (SC) is a subscriber identity module.

7. A method as defined in any one of the preceding claims 1, 2, 3, 4 or 5, **characterised in that** the smart card (SC) is a subscriber identity module that comprises a WIM.

8. A method as defined in any one of the preceding claims 1, 2, 3, 4 or 5, **characterised in that** the smart card (SC) is a WIM card.

9. A method as defined in any one of the preceding claims 1, 2, 3, 4, 5, 6, 7 or 8, **characterised in that** the piece of definition information (EF) is part of WIM.

10. A method as defined in any one of the preceding claims 1, 2, 3, 4, 5, 6, 7, 8 or 9, **characterised in that** the terminal device (MS) is a mobile station.

11. A method as defined in any one of the preceding claims 1, 2, 3, 4, 5, 6, 7, 8, 9 or 10, **characterised in that** the telecommunication network (WN) is a mobile communication network.

12. A system for using applications stored on a terminal device and/or smart card in a telecommunication system comprising:
a telecommunication network (WN);
a terminal device (MS) which is connected to the telecommunication network;
a server (SERVER) which is connected to the telecommunication network (WN);
a smart card (SC) which has been inserted into the terminal device (MS);
a SIM Application Toolkit (STK) which has been provided in the terminal device (MS) and/or smart card (SC);
in which system the terminal device (MS) comprises the necessary features for using the WAP,
**characterised in that** the system comprises:
means for generating a piece of definition information (EF) which comprises information about the SIM Application Toolkit applications at the disposal of the terminal device (MS) and about the use of said applications in a WAP environment;
an information reader (RD) which is used to read definition information (EF) to use SIM Application Toolkit applications in a WAP environment; and
a generator (GEN) which is used to display SIM Application Toolkit applications on a terminal device (MS) in a WAP environment in the way as defined by the piece of definition information (EF).

13. A system as defined in claim 12, **characterised in that** the piece of definition information (EF) has been arranged in the terminal device (MS) and/or smart card (SC).

14. A system as defined in claim 12 or 13, **characterised in that**
the piece of definition information (EF) has been arranged in the server (SERVER);
the terminal device (MS) and/or smart card (SC) comprises a pointer (PT) which refers to the piece of definition information (EF) located on the server (SERVER); and
the terminal device (MS) and/or smart card (SC) comprise an information retrieval entity (IO) for retrieving the piece of definition information (EF) by way of the telecommunication network (WN).

15. A system as defined in any one of the preceding claims 12, 13 or 14, **characterised in that** the terminal device (MS) and/or smart card (SC) comprises a modifier (MOD) for modifying the piece of definition information (EF).

16. A system as defined in any one of the preceding claims 12, 13, 14 or 15, **character**i sed in that the terminal device (MS) and/or smart card (SC) comprises a certification entity (SEC) which is used to make sure of the reliability and origin of the piece of definition information (EF).

17. A system as defined in any one of the preceding claims 12, 13, 14, 15 or 16, **characterised in that** the smart card (SC) is a subscriber identity module.

18. A system as defined in any one of the preceding claims 12, 13, 14, 15 or 16, **characterised in that** the smart card (SC) is a subscriber identity module which comprises a WIM.

19. A system as defined in any one of the preceding claims 12, 13, 14, 15 or 16, **characterised in that** the smart card (SC) is a WIM card.

20. A system as defined in any one of the preceding claims 12, 13, 14, 15, 16, 17, 18 or 19, **characterised in that** the terminal device (MS) is a mobile station.

21. A system as defined in any one of the preceding claims 12, 13, 14, 15, 16, 17, 18, 19 or 20, **characterised in that** the telecommunication network (WN) is a mobile communication network.

## Patentansprüche

1. Verfahren zum Nutzen von Applikationen bzw. Dienstprogrammen, welche auf einem Endgerät und/oder einer Chipkarte gespeichert sind, in einem Telekommunikationssystem, welches ein Telekommunikationsnetz (WN) aufweist, wobei das Verfahren die Schritte beinhaltet:
Anbindung eines Endgerätes (MS) an das Telekommunikationsnetz, wobei das Endgerät (MS) die notwendigen Merkmale zum Benutzen des WAP aufweist;
Anbindung eines Servers (SERVER) an das Telekommunikationsnetz (WN);
Einsetzen einer Chipkarte (SC) in das Endgerät (MS); und
Liefern eines SIM-Applikations-Toolkits bzw. -Dienstprogrammsammlung (STK) in dem Endgerät (MS) und/oder der Chipkarte (SC);
**dadurch gekennzeichnet, dass** das Verfahren ferner die Schritte aufweist:
Erzeugen eines Datensatzes einer Definitionsinformation (EF), welche Informationen über die Anwendungen des SIM-Applikations-Toolkits aufweist, welche an dem Endgerät (MS) zur Verfügung stehen, und über das Verwenden dieser Anwendungen in einer WAP-Umgebung;
Lesen der Definitionsinformation (EF), um die Anwendungen des SIM-Applikations-Toolkits in einer WAP-Umgebung zu nutzen;
Anzeigen der Anwendungen des SIM-Applikations-Toolkits auf einem Endgerät (MS) in einer WAP-Umgebung in der Weise, wie sie durch den Datensatz der Definitionsinformation (EF) definiert ist.

2. Verfahren nach Anspruch 1, **dadurch gekennzeichnet, dass** ein Datensatz von Definitionsinformation (EF) auf dem Endgerät (MS) und/oder der Chipkarte (SC) erzeugt wird.

3. Verfahren nach Anspruch 1, **dadurch gekennzeichnet, dass** das Verfahren die Schritte aufweist:
Erzeugen eines Datensatzes an Definitionsinformation (EF) auf dem Server (SERVER);
Speichern eines Pointers bzw. Zeigers auf dem Endgerät (MS) und/oder der Chipkarte (SC), welcher sich auf den Datensatz der Definitionsinformation (EF) bezieht, welche auf dem Server (SERVER) liegt bzw. platziert ist; und
Wiedergewinnen des Datensatzes der Definitionsinformation (EF) über das Telekommunikationsnetz (WN).

4. Verfahren nach einem der vorhergehenden Ansprüche 1, 2 oder 3, **dadurch gekennzeichnet, dass** der Datensatz der Definitionsinformation (EF) auf dem Endgerät (MS) ausgegeben wird.

5. Verfahren nach einem der vorhergehenden Ansprüche 1, 2, 3 oder 4, **dadurch gekennzeichnet, dass** die Zuverlässigkeit bzw. Richtigkeit und der Ursprung des Datensatzes der Definitionsinformation (EF) durch Nutzen einer Zertifikatsentität (SEC) festgestellt wird, welche in dem Endgerät (MS) und/oder der Chipkarte (SC) geliefert wird.

6. Verfahren nach einem der vorhergehenden Ansprüche 1, 2, 3, 4 oder 5, **dadurch gekennzeichnet, dass** die Chipkarte (SC) ein Teilnehmer-Identitätsmodul ist.

7. Verfahren nach einem der vorhergehenden Ansprüche 1, 2, 3, 4 oder 5, **dadurch gekennzeichnet, dass** die Chipkarte (SC) ein Teilnehmer-Identitätsmodul ist, welches ein WIM aufweist.

8. Verfahren nach einem der vorhergehenden Ansprüche 1, 2, 3 4 oder 5, **dadurch gekennzeichnet, dass** die Chipkarte (SC) eine WIM-Karte ist.

9. Verfahren nach einem der vorhergehenden Ansprüche 1, 2, 3, 4, 5, 6, 7 oder 8, **dadurch gekennzeichnet, dass** der Datensatz der Definitionsinformation (EF) Teil des WIM ist.

10. Verfahren nach einem der vorhergehenden Ansprüche 1, 2, 3, 4, 5, 6, 7, 8 oder 9, **dadurch gekennzeichnet, dass** das Endgerät (MS) ein Mobiltelefon ist.

11. Verfahren nach einem der vorhergehenden Ansprüche 1, 2, 3, 4, 5, 6, 7, 8, 9 oder 10, **dadurch gekennzeichnet, dass** das Telekommunikationsnetz (WN) ein Mobilkommunikationsnetz ist.

12. System zum Benutzen der Applikationen, welche auf einem Endgerät und/oder einer Chipkarte in einem Telekommunikationssystem gespeichert sind, welches aufweist:
ein Telekommunikationsnetz (WN);
ein Endgerät (MS), welches mit dem Telekommunikationsnetz verbunden ist;
einen Server (SERVER), welcher mit dem Telekommunikationsnetz (WN) verbunden ist;
eine Chipkarte (SC), welche in das Endgerät (MS) eingesteckt wurde;
ein SIM-Applikations-Toolkit bzw. -Dienstprogrammsammlung (STK), welches in dem Endgerät (MS) und/oder der Chipkarte (SC) vorgesehen wurde;
wobei das Endgerät (MS) in dem System die notwendigen Merkmale zum Benutzen des WAP aufweist,
**dadurch gekennzeichnet, dass** das System aufweist:
eine Vorrichtung zum Erzeugen eines Datensatzes der Definitionsinformation (EF), welcher Information über die Anwendungen des SIM-Applikations-Toolkits aufweist, welche
an dem Endgerät (MS) zur Verfügung stehen, und über das Anwenden dieser Applikationen in einer WAP-Umgebung;
eine Informations-Leseeinrichtung (RD), welche benutzt wird, um die Definitionsinformation (EF) zu lesen, um die Anwendungen des SIM-Applikations-Toolkits in einer WAP-Umgebung zu benutzen; und
eine Generatoreinrichtung (GEN), welche benutzt wird, um die Anwendungen des SIM-Applikations-Toolkits auf einem Endgerät (MS) in einer WAP-Umgebung in der Weise anzuzeigen, wie sie durch den Datensatz der Definitionsinformation (EF) definiert ist.

13. System nach Anspruch 12, **dadurch gekennzeichnet, dass** der Datensatz der Definitionsinformation (EF) in dem Endgerät (MS) und/oder der Chipkarte (SC) angeordnet wurde.

14. System nach Anspruch 12 oder 13, **dadurch gekennzeichnet, dass**
der Datensatz der Definitionsinformation (EF) in dem Server (SERVER) angeordnet wurde;
das Endgerät (MS) und/oder die Chipkarte (SC) einen Pointer bzw. Zeiger (PT) aufweist, welcher auf den Datensatz der Definitionsinformation (EF) Bezug nimmt, welcher auf dem Server (SERVER) liegt bzw. platziert ist; und
das Endgerät (MS) und/oder die Chipkarte (SC) einen Information für das Wiedergewinnen der Entität (IO) aufweist zum Wiedergewinnen des Datensatzes der Definitionsinformation (EF) mit Hilfe des Telekommunikationsnetzes (WN).

15. System nach einem der vorhergehenden Ansprüche 12, 13 oder 14, **dadurch gekennzeichnet, dass** das Endgerät (MS) und/oder die Chipkarte (SC) eine Modifiziereinrichtung (MOD) zum Modifizieren des Datensatzes der Definitionsinformation (EF) aufweist.

16. System nach einem der vorhergehenden Ansprüche 12, 13, 14 oder 15, **dadurch gekennzeichnet, dass** das Endgerät (MS) und/oder die Chipkarte (SC) eine Zertifikationsentität (SEC) aufweist, welche benutzt wird, um die Zuverlässigkeit bzw. Richtigkeit und den Ursprung des Datensatzes der Definitionsinformation (EF) sicherzustellen.

17. System nach einem der vorhergehenden Ansprüche 12, 13, 14, 15 oder 16, **dadurch gekennzeichnet, dass** die Chipkarte (SC) ein Teilnehmer-Identitätsmodul ist.

18. System nach einem der vorhergehenden Ansprüche 12, 13, 14, 15 oder 16, **dadurch gekennzeichnet, dass** die Chipkarte (SC) ein Teilnehmer-Identitätsmodul ist, welches ein WIM aufweist.

19. System nach einem der vorhergehenden Ansprüche 12, 13, 14, 15 oder 16, **dadurch gekennzeichnet, dass** die Chipkarte (SC) eine WIM-Karte ist.

20. System nach einem der vorhergehenden Ansprüche 12, 13, 14, 15, 16, 17, 18 oder 19, **dadurch gekennzeichnet, dass** das Endgerät (MS) ein Mobiltelefon ist.

21. System nach einem der vorhergehenden Ansprüche 12, 13, 14, 15, 16, 17, 18, 19 oder 20, **dadurch gekennzeichnet, dass** das Telekommunikationsnetz (WN) ein Mobilkommunikationsnetz ist.

## Revendications

1. Procédé pour utiliser des applications mémorisées sur un dispositif terminal et/ou sur une carte à puce dans un système de télécommunication comprenant un réseau de télécommunication (WN), le procédé comprenant les étapes consistant à :
connecter un dispositif terminal (MS) au réseau de télécommunication, ledit dispositif terminal (MS) comprenant les fonctionnalités nécessaires pour utiliser le WAP ;
connecter un serveur (SERVER) au réseau de télécommunication (WN) ;
insérer une carte à puce (SC) dans le dispositif terminal (MS) ; et
prévoir une boîte à outils d'application SIM (STK) dans le dispositif terminal (MS) et/ou sur la carte à puce (SC) ;
**caractérisé en ce que** le procédé comprend, en outre, les étapes consistant à :
générer un élément d'informations de définition (EF) qui comprend des informations concernant les applications de boîte à outils d'application SIM à la disposition du dispositif terminal (MS) et concernant l'utilisation desdites applications dans un environnement WAP ;
lire des informations de définition (EF) pour utiliser des applications de boîte à outils d'application SIM dans un environnement WAP ;
afficher des applications de boîte à outils d'application SIM sur un dispositif terminal (MS) dans un environnement WAP de la manière définie par l'élément d'informations de définition (EF).

2. Procédé selon la revendication 1, **caractérisé en ce qu'**un élément d'informations de définition (EF) est généré sur le dispositif terminal (MS) et/ou sur la carte à puce (SC).

3. Procédé selon la revendication 1, **caractérisé en ce que** le procédé comprend les étapes consistant à :
générer un élément d'informations de définition (EF) sur le serveur (SERVER) ;
mémoriser, sur le dispositif terminal (MS) et/ou sur la carte à puce (SC), un pointeur qui renvoie à l'élément d'informations de définition (EF) situé sur le serveur (SERVER) ; et
récupérer l'élément d'informations de définition (EF) au moyen du réseau de télécommunication (WN).

4. Procédé selon l'une quelconque des revendications précédentes 1, 2 ou 3, **caractérisé en ce que** l'élément d'informations de définition (EF) est édité sur le dispositif terminal (MS).

5. Procédé selon l'une quelconque des revendications précédentes 1, 2, 3 ou 4, **caractérisé en ce que** la fiabilité et l'origine de l'élément d'informations de définition (EF) sont établies en utilisant une entité de certification (SEC) prévue dans le dispositif terminal (MS) et/ou sur la carte à puce (SC).

6. Procédé selon l'une quelconque des revendications précédentes 1, 2, 3, 4 ou 5, **caractérisé en ce que** la carte à puce (SC) est un module d'identité d'abonné.

7. Procédé selon l'une quelconque des revendications précédentes 1, 2, 3, 4 ou 5, **caractérisé en ce que** la carte à puce (SC) est un module d'identité d'abonné qui comprend un WIM.

8. Procédé selon l'une quelconque des revendications précédentes 1, 2, 3, 4 ou 5, **caractérisé en ce que** la carte à puce (SC) est une carte WIM.

9. Procédé selon l'une quelconque des revendications précédentes 1, 2, 3, 4, 5, 6, 7 ou 8, **caractérisé en ce que** l'élément d'informations de définition (EF) fait partie du WIM.

10. Procédé selon l'une quelconque des revendications précédentes 1, 2, 3, 4, 5, 6, 7, 8 ou 9, **caractérisé en ce que** le dispositif terminal (MS) est une station mobile.

11. Procédé selon l'une quelconque des revendications précédentes 1, 2, 3, 4, 5, 6, 7, 8, 9 ou 10, **caractérisé en ce que** le réseau de télécommunication (WN) est un réseau de communication mobile.

12. Système pour utiliser des applications mémorisées sur un dispositif terminal et/ou une carte à puce dans un système de télécommunication comprenant :
un réseau de télécommunication (WN) ;
un dispositif terminal (MS) qui est connecté au réseau de télécommunication ;
un serveur (SERVER) qui est connecté au réseau de télécommunication (WN) ;
une carte à puce (SC) qui a été insérée dans le dispositif terminal (MS) ;
une boîte à outils d'application SIM (STK) qui a été prévue dans le dispositif terminal (MS) et/ou sur la carte à puce (SC) ;
dans lequel système le dispositif terminal (MS) comprend les fonctionnalités nécessaires pour utiliser le WAP,
**caractérisé en ce que** le système comprend :
des moyens pour générer un élément d'informations de définition (EF) qui comprend des informations concernant les applications de boîte à outils d'application SIM à la disposition du dispositif terminal (MS) et concernant l'utilisation desdites applications dans un environnement WAP ;
un lecteur d'informations (RD) qui est utilisé pour lire des informations de définition (EF) pour utiliser des applications de boîte à outils d'application SIM dans un environnement WAP ; et
un générateur (GEN) qui est utilisé pour afficher des applications de boîte à outils d'application SIM sur un dispositif terminal (MS) dans un environnement WAP de la manière définie par l'élément d'informations de définition (EF).

13. Système selon la revendication 12, **caractérisé en ce que** l'élément d'informations de définition (EF) a été agencé dans le dispositif terminal (MS) et/ou sur la carte à puce (SC).

14. Système selon la revendication 12 ou 13, **caractérisé en ce que**
l'élément d'informations de définition (EF) a été agencé dans le serveur (SERVER) ;
le dispositif terminal (MS) et/ou la carte à puce (SC) comprennent un pointeur (PT) qui renvoie à l'élément d'informations de définition (EF) situé sur le serveur (SERVER) ; et
le dispositif terminal (MS) et/ou la carte à puce (SC) comprennent une entité de récupération d'informations (IO) pour récupérer l'élément d'informations de définition (EF) au moyen du réseau de télécommunication (WN).

15. Système selon l'une quelconque des revendications précédentes 12, 13 ou 14, **caractérisé en ce que** le dispositif terminal (MS) et/ou la carte à puce (SC) comprennent un modificateur (MOD) pour modifier l'élément d'informations de définition (EF).

16. Système selon l'une quelconque des revendications précédentes 12, 13, 14 ou 15, **caractérisé en ce que** le dispositif terminal (MS) et/ou la carte à puce (SC) comprennent une entité de certification (SEC) qui est utilisée pour s'assurer de la fiabilité et de l'origine de l'élément d'informations de définition (EF).

17. Système selon l'une quelconque des revendications précédentes 12, 13, 14, 15 ou 16, **caractérisé en ce que** la carte à puce (SC) est un module d'identité d'abonné.

18. Système selon l'une quelconque des revendications précédentes 12, 13, 14, 15 ou 16, **caractérisé en ce que** la carte à puce (SC) est un module d'identité d'abonné qui comprend un WIM.

19. Système selon l'une quelconque des revendications précédentes 12, 13, 14, 15 ou 16, **caractérisé en ce que** la carte à puce (SC) est une carte WIM.

20. Système selon l'une quelconque des revendications précédentes 12, 13, 14, 15, 16, 17, 18 ou 19, **caractérisé en ce que** le dispositif terminal (MS) est une station mobile.

21. Système selon l'une quelconque des revendications précédentes 12, 13, 14, 15, 16, 17, 18, 19 ou 20, **caractérisé en ce que** le réseau de télécommunication (WN) est un réseau de communication mobile.
